# EUROPEAN PATENT SPECIFICATION

(11) **EP 1 452 344 B1**
(45) Date of publication and mention of the grant of the patent: **29.08.2007**
(21) Application number: 04100564.6
(22) Date of filing: 13.02.2004
(51) Int. Cl.: B60C 11/00, C08L 7/00, C08L 9/00, C08L 21/00, C08K 3/04, C08K 3/36

(54) **Tire with tread of natural rubber-rich rubber composition**
Reifen mit einer Lauffläche aus einer naturgummireichen Gummimischung
Pneu avec une bande de roulement contenant un mélange riche en caoutchouc naturel

(30) Priority: 17.02.2003 US 368258
(43) Date of publication of application: 01.09.2004
(73) Proprietor: THE GOODYEAR TIRE & RUBBER COMPANY, Akron, Ohio 44316-0001 (US)
(72) Inventor: Steiner, Pascal Patrick, L-9233, Diekirch (LU); Linster, Tom Dominique, L-9370, Gilsdorf (LU)
(74) Representative: Kutsch, Bernd

(56) References cited:
- EP-A- 0 829 511
- EP-A- 0 896 978
- EP-A- 1 033 265
- EP-A- 1 077 228
- EP-A- 1 188 786
- EP-A- 1 231 080
- EP-A- 1 254 786

## Description

### Field of the Invention

This invention relates to tires having a tread of a natural rubber-rich rubber composition reinforced with a combination of rubber reinforcing carbon black and precipitated silica in which carbon black is in the majority of such reinforcement. In one aspect, the tread rubber has a balance of physical properties. Such balance of physical properties includes relatively high hardness and abrasion resistance properties balanced with an acceptable rebound property.

### Background of the Invention

A pneumatic tire is a composite of complex structure of interacting components, each with properties intended for suitable effectiveness. One important component of a tire is a tread which designed to be a running surface of the tire.

For this invention, a tire tread is desired which is has relatively high hardness and abrasion resistance properties in combination with a an acceptable internal heat generation property such as, for example, a hot rebound property.

The hardness property relates to the stiffness of the tire tread. The abrasion resistance property can relate to resistance to tread wear for a tire tread.

The hot rebound property can relate to an ability of a tread of relatively high stiffness to resist internal heat generation, with an accompanying temperature rise, which, in turn, may relate to durability of the tire tread under working conditions.

It is appreciated that an optimization of one physical property usually detracts, or retards, at least one other physical property. Accordingly, there is desire to present a tire tread of relatively high hardness and abrasion resistance properties which also presents an acceptable hot rebound property.

For this invention, it is desired to provide a tire tread of a rubber composition having a balance of relatively high stiffness, or hardness, high abrasion resistance and an acceptable hot rebound properties for a tread rubber having such relatively high hardness and abrasion resistance properties. Such balance of physical properties is achieved, at least in part, by use of a natural rubber-rich tire tread rubber composition, together with cis 1,4-polybutadiene and styrene/butadiene copolymer rubber which is reinforced with a reinforcing filler as a combination of high structure rubber reinforcing carbon black and precipitated silica in which the carbon black is in the majority of the reinforcing filler..

In the description of this invention, the terms "rubber" and "elastomer" where used herein, may be used interchangeably, unless otherwise indicated.

In the description of this invention, the term "phr" refers to parts of a respective material per 100 parts by weight of rubber, or elastomer. The terms "cure" and "vulcanize" may be used interchangeably unless otherwise indicated.

The glass transition temperature (Tg) of an elastomer may be determined by DIN 53445 at a heating rate of 1°C per minute unless otherwise indicted.

### Summary and Practice of the Invention

In accordance with this invention, a tire is provided having an outer circumferential tread of a natural rubber-rich, carbon black-rich, silica-containing sulfur cured rubber composition according to claim 1.

Such coupling agent may, for example, be preferably a bis-(3-triethoxysilylpropyl) polysulfide having an average of from 2 to 2.6 or from 3.5 to 4, preferably from 3.5 to 4, connecting sulfur atoms in its polysulfidic bridge. Such coupling agent may be used, for example, as a weight ratio thereof to said precipitated silica in a range of from 0.1 to about 0.15.

The rubber composition is natural rubber-rich in a sense that at least 70 weight percent of the elastomers is natural cis 1,4-polyisoprene rubber. The high natural rubber content of the rubber composition is intended to aid in promoting stiffness and damage resistance, as well as heat durability, for the rubber composition.

While cis 1,4-polybutadiene rubber is often used in a rubber composition for a tire tread to promote abrasion resistance, for this rubber composition the cis 1,4-polybutadiene rubber content is limited to about 5 to about 15 phr to aid in promoting damage resistance for the tire tread rubber composition.

A third elastomer, namely a styrene/butadiene copolymer rubber preferably prepared by aqueous emulsion polymerization (polymerization of styrene and 1,3-butadiene monomers) is used to aid in promoting tire handling and wet skid (wet traction) performance of the tire tread.

A major portion of the reinforcing filler for the rubber composition is a small particle (high iodine value), high structure (high dibutylphthalate, or DBP, value) carbon black in order to aid in promoting a suitable abrasion resistance. A minor portion of the reinforcing filler is precipitated silica, together with a silica coupling agent, in order to aid in promoting low heat generation, or high hot rebound value, and in promoting damage resistance.

In particular, a high structure carbon black is used which has a relatively high Iodine value and relatively high dibutylphthalate (DBP) value and is thus of a relatively small particle size (the high Iodine value) and of a relatively high structure (the relatively high DPB value). Such carbon black(s) are conventionally used in tire treads to promote abrasion resistance. Representative of such carbon blacks is, for example, N121, an ASTM designation, as reported, together with other rubber reinforcing carbon blacks, in The Vanderbilt Rubber Handbook, (1978 edition), on Page 417. Such N121 rubber reinforcing carbon black is reported therein as having a typical iodine value of about 120 mg/g and a typical DBP value of about 130 ml/100g.

The precipitated silica is a synthetic amorphous silica having a nitrogen (BET) surface area value in a range of about 140 to about 180 m²/g. Such nitrogen surface value may be determined, for example, by the method of Braunauer, Emmett and Teller described in the Journal of the American Chemical Society, February 1938, Vol. 60, Page 309.

In practice, it is preferred that the sulfur vulcanized natural rubber rich rubber composition for a tire tread has a beneficial balance of physical properties. Such balance of physical properties can be readily by one having skill in such rubber compounding art with routine experimentation by adjustment of sulfur and vulcanization accelerator contents and suitable vulcanization times and temperatures without undue experimentation.

In particular, it is preferred that the sulfur vulcanized rubber composition has a suitable stiffness as evidenced by a Shore A hardness (23°C), (see ASTM D2240), in a range of 65 to 75, and a G' loss modulus in a range of 1.8 to 2.4 MPa. The G' modulus can be readily be determined by a Metravib™ instrument, Model No. VA3000 at 90°C, 6 percent strain and 7.8 hertz (test method is understood to be similar to ISO 4664 and DIN 53513).

In combination with the rubber composition's stiffness property, it is preferred that the sulfur vulcanized rubber composition has an abrasion resistance as evidenced by a DIN abrasion value of 75 to 95 relative volume loss (mm³) at one Newton force, according to DIN 53516/ASTM D5963.

In combination with the rubber composition's stiffness and abrasion resistance properties, it is preferred that the sulfur vulcanized rubber composition has a relatively low heat generation property, particularly for the relatively high stiffness value, as indicated by a hot rebound value (100°C), of 65 to 70 percent and a tan delta (90°C) in a range of 0.12 to 0.16. The hot rebound value can be determined by ASTM D1054 and the tan delta value can be determined by a Metravib™ instrument, Model No. VA3000 at 90°C, 6 percent strain and 7.8 hertz (test method is understood to be similar to ISO 4664 and DIN 53513).

In combination with the rubber composition's stiffness, abrasion resistance and low heat generation properties, it is preferred that the sulfur vulcanized rubber composition has a relatively high damage resistance property, particularly for the relatively high hardness property, as indicated by a relatively high hot tear resistance property (100°C ) of 25 to 40 N/mm and a damage resistance index (DRI) in a range of 13 to 16 percent. The hot tear resistance property (tear strength) determination is conducted for peal adhesion of a sample to another sample of the same material. A description may be found in ASTM D4393 except that a sample width of 2.5 cm is used and a clear Mylar plastic film window of a 5 mm width is inserted between the two test samples. It is an interfacial adhesion measurement (pulling force expressed in N/mm units) between two layers of the same tested compound which have been co-cured together with the Mylar film window therebetween. The purpose of the Mylar film window is to delimit the width of the pealed area. The DRI property can be determined by the formula: DRI = (G'/(300 percent modulus)) x (100). This property is considered herein to be measure, or indication of the cracking and tear propagation resistance of the compound. In practice, the 300 percent modulus value, (see Ring Modulus ASTM D412), of the sulfur vulcanized rubber composition may range, for example, from about 13.8 to about 15 MPa.

It is considered herein that a significant aspect of the invention is the tread of a rubber composition having an optimized combination of the hardness and abrasion resistance physical properties while maintaining an acceptable heat generation capacity as evidenced by a hot rebound (100°C) value and a relatively high damage resistance index (DRI) and hot tear resistance.

This is considered herein to be significant because the natural rubber-rich rubber composition for a tire tread is provided with a significant and beneficially balanced compromise of stiffness, abrasion resistance, heat generation and damage resistance index properties.

Significant factors in achieving the beneficial balance of physical properties is considered herein, in one aspect, to be largely attributable to the high natural rubber content of the rubber composition which aids in promoting stiffness, damage resistance and heat durability together with the cis 1,4-polybutadiene rubber and emulsion polymerization prepared styrene/butadiene rubber and together with the significantly high structure rubber reinforcing carbon black and precipitated silica, together with its coupling agent.

Accordingly, for one aspect of the invention, a tire is provided having a tread of a sulfur vulcanized rubber composition having a balance of physical properties according to claim 2.

It is considered herein that a significant aspect of this invention is the above compromised balance, for a vehicular tire tread, between stiffness, abrasion resistance, heat generation and damage resistance index by use of the natural rubber-rich and selected rubber reinforcing carbon black and precipitated silica containing rubber composition.

It is considered herein that a significant aspect of this invention insofar as promoting a Shore A hardness value and G' value in the indicated range is the high natural rubber content of the rubber composition composed of three elastomers together with the indicated selective reinforcement loading of carbon black and precipitated silica, with the majority being a high structure carbon black.

It is considered herein that a significant aspect of this invention insofar as promoting a DIN abrasion resistance value, hot tear resistance value and damage resistance index (DRI) is a contribution of relatively high reinforcing filler loading and selection of reinforcing filler types as well the selection of the respective elastomers.

It is considered herein that a significant aspect of this invention insofar as promoting a rebound (100°C) value and the tan delta (90°C) value is the relatively high silica reinforcing filler loading if the indicated precipitated silica together with its coupling agent.

It should readily be understood by one having skill in the art that rubber compositions for components of the pneumatic tire, including the fillers can be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as rubber processing oils, resins including tackifying resins, silicas and plasticizers, fillers, pigments, or other materials such as tall oil resins, zinc oxide, waxes, antioxidants and antiozonants, peptizing agents and reinforcing materials such as, for example, the indicated high structure carbon black and precipitated silica. As known to those skilled in the art, depending on the intended use of the sulfur vulcanizable and sulfur-vulcanized materials (rubbers), the certain additives mentioned above are selected and commonly used in conventional amounts.

Typical amounts of resins, if used, including tackifier resins and stiffness resins, if used, including unreactive phenol formaldehyde tackifying resins and, also stiffener resins of reactive phenol formaldehyde resins and resorcinol or resorcinol and hexamethylene tetramine, may collectively comprise 1 to 10 phr, with a minimum tackifier resin, if used, being 1 phr and a minimum stiffener resin, if used, being 3 phr. Such resins may sometimes be referred to as phenol formaldehyde-type resins. Typical amounts of processing aids comprise 4 to 10.0 phr. Typical amounts of antioxidants comprise 1 to 5 phr. Representative antioxidants may be, for example, diphenyl-p-phenylenediamine and others, such as those disclosed in The Vanderbilt Rubber Handbook (1978), pages 344-346. Suitable antiozonant(s) and waxes, particularly microcrystalline waxes, may be of the type shown in The Vanderbilt Rubber Handbook (1978), Pages 346 and 347. Typical amounts of antiozonants comprise 1 to 5 phr. Typical amounts of stearic acid and/or tall oil fatty acid may comprise 1 to 3 phr. Typical amounts of zinc oxide comprise 2 up to 10 phr. Typical amounts of waxes comprise 1 to 5 phr. Typical amounts of peptizers comprise 0.1 to 1 phr. The presence and relative amounts of the above additives are not an aspect of the present invention, so long as the aforesaid physical properties of the tread are met.

The vulcanization of the rubber composition(s) is/are conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 8 phr with a range of from 2 to 5 being preferred for the stiff rubbers desired for use in this invention.

Accelerators are used to control the time and/or temperature required for vulcanization and to improve the properties of the vulcanizate. In one embodiment, a single accelerator system may be used; i.e., primary accelerator. Conventionally, a primary accelerator is used in amounts ranging from 0.5 to 3 phr. In another embodiment, combinations of two or more accelerators in which a primary accelerator is generally used in the larger amount (0.5 to 2 phr), and a secondary accelerator which is generally used in smaller amounts (0.05 to 0.50 phr), in order to activate and to improve the properties of the vulcanizate. Combinations of such accelerators have historically been known to produce a synergistic effect of the final properties of sulfur-cured rubbers and are often somewhat better than those produced by use of either accelerator alone. In addition, delayed action accelerators may be used which are less affected by normal processing temperatures but produce satisfactory cures at ordinary vulcanization temperatures. Representative examples of accelerators include amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound, although a second sulfenamide accelerator may be used. In the practice of this invention, one and sometimes two or more accelerators are preferred for the high stiffness rubbers.

This invention is illustrated by the following examples. Unless specifically indicated otherwise, parts and percentages are, which may be rounded, given by weight.

### EXAMPLE I

Sulfur curable rubber compositions are prepared which are comprised of cis 1,4-polyisoprene natural rubber, cis 1,4-polybutadiene rubber and emulsion polymerization prepared styrene/butadiene rubber as well as high structure carbon black, precipitated silica and coupling agent.

Control Sample A is provided as a control rubber composition comprised of the cis 1,4-polyisoprene rubber, cis 1,4-polybutadiene rubber and high structure rubber reinforcing carbon black as N121, an ASTM designation referenced in said hereinbefore referred to Vanderbilt Rubber Handbook on Page 417 which recites typical Iodine and DBP values for such carbon black.

Sample B is comprised of a natural rubber rich elastomer composition, including reinforcing filler as a high structure rubber reinforcing carbon black as the ASTM designated N121 carbon black, precipitated silica and coupling agent, where the high structure carbon black is the majority of the reinforcing filler.

The Samples were prepared by mixing the ingredients in an internal rubber mixer in a non-productive (without sulfur and accelerators) mixing step followed by a productive (with sulfur and accelerator addition at a lower mix temperature) mixing step. The rubber compositions were dumped from the rubber mixer after each mixing step, sheeted out from an open mill and allowed to cool to below 40°C after each mixing step. The ingredients were mixed in the non-productive mixing step for 2 minutes to a temperature of 145°C. The subsequent productive mixing step was conducted for 2 minutes to a temperature of 115°C.

Table 1 illustrates the ingredients used for preparing the rubber compositions of Control Sample A and Sample B.

**Table 1**

| | Control | |
|---|---|---|
| | Sample A | Sample B |
| Non-Productive Mixing Step (to 145°C) Common Materials | | |
| Cis 1,4-polyisoprene rubber¹ | 80 | 80 |
| Cis 1,4-polybutadiene rubber² | 20 | 10 |
| Styrene/butadiene rubber³ | 0 | 10 |
| High structure carbon black⁴ | 46 | 32 |
| Precipitated silica⁵ | 0 | 27 |
| Coupling agent⁶ | 1.5 | 3.5 |
| Antioxidant⁷ | 2 | 1.5 |
| Fatty acid⁸ | 4 | 3 |
| Paraffinic processing oil | 0 | 2 |
| Zinc oxide | 5 | 3 |

| Productive Mixing Step (to 115°C) | | |
|---|---|---|
| Accelerator(s)⁹ | 1.3 | 2 |
| Sulfur | 1.3 | 1 |

| | | |
|---|---|---|
| ¹Natural cis 1,4-polyisoprene rubber having a cis 1,4- content of at least 96 percent and a Tg of about -65°C. | | |
| ²Cis 1,4-polybutadiene rubber obtained as Budene 1207 from The Goodyear Tire & Rubber Company having a cis 1,4-content of at least 96 percent and a Tg of about -100°C | | |
| ³Styrene/butadiene copolymer rubber as Plioflex 1502NN(tm) from The Goodyear Tire & Rubber Company having a styrene content of about 23.5 percent and a Tg of about -50°C prepared by aqueous emulsion polymerization of styrene and 1,3-butadiene monomers. | | |
| ⁴N121 carbon black, an ASTM designation | | |
| ⁵ Zeosil 1165MP™ from the Rhodia Company having a BET nitrogen surface area within a range of 140 to 180 m²/g | | |
| ⁶Composite of coupling agent as Si69™ as a bis (3-triethoxysilylpropyl) polysulfide containing from an average of 3.5 to 4 connecting sulfur atoms in its polysulfidic bridge, which may sometimes be referred to as a tetrasulfide, on carbon carrier in a 50/50 weight ratio, from Degussa-Hulls and reported in the Table on a basis of the composite of coupling agent and carbon black. | | |
| ⁷Amine based antidegradant | | |
| ⁸Primarily stearic acid which also contains oleic and linoleic acids | | |
| ⁹Sulfenamide based accelerator | | |

The rubber compositions of Table 1 were cured for 32 minutes at 150°C. Various resulting physical properties are shown in the following Table 2.

**Table 2**

| | Control | |
|---|---|---|
| | Sample A | Sample B |
| Visco Analyzer (7.8 Hertz, 90°C, 6% strain)1 | | |
| G' (MPa) | 1.6 | 2.1 |
| Tan delta | 0.13 | 0.14 |
| Modulus, 300 percent (MPa) | 13 | 14.6 |
| Ultimate elongation (percent) | 480 | 470 |
| DIN abrasion (mm³ loss at 23°C) | 110 | 86 |
| Shore A hardness (23°C) | 64 | 69 |
| Hot rebound (100°C) | 69 | 67 |
| Tear resistance (N/mm) | 22 | 30 |
| Damage resistance index (DRI) | 12.3 | 14.4 |

| | | |
|---|---|---|
| ¹The Visco Analyzer is an analytical instrument used for measuring G' and tan delta values for rubber samples, obtained as Model Number VA3000 from the Metravib Company. For these Samples, the instrument was operated and the data was taken at a frequency of 7.8 Hertz and a 6 percent strain for the sample, at a temperature of 90°C. | | |

From Table 1, it can be seen that cis 1,4-polyisoprene natural-rich Samples were prepared with a high structure carbon black as N121. Sample B also contained a precipitated silica, with a coupling agent. The elastomer selection and amounts and the reinforcing filler selection and amounts for Sample B is considered herein to be important for promoting a beneficial compromise of physical properties of the sulfur vulcanized Sample B, namely the stiffness (G' and Shore A hardness), abrasion resistance, heat generation (Hot rebound and tan delta), and damage resistance (tear resistance and DRI) values.

From Table 2, it can be seen that, for Sample B,
(A) a relatively high level of stiffness was obtained (Shore A hardness of 69 as compared to 64 for the Control, and G' of 2.1 MPa as compared to 1.6 for the Control),
(B) a satisfactory DIN abrasion resistance was obtained of only 86 as compared to 110 for the Control, and
(C) a satisfactory damage resistance was obtained (tear resistance of 30 as compared to 22 for the Control and DRI of 14.4 as compared to 12.3 for the Control).

These beneficial physical properties were obtained without a significant negative impact upon heat generation (hot rebound of 67 as compared to 69 for the Control and tan delta at 90°C of 0.14 as compared to 0.13 for the Control). This is considered to be significant because it is considered herein that such compromise of physical properties (the beneficial properties in combination with substantially maintaining the aforesaid heat generation properties) for a tire tread rubber composition will aid in providing a tread of a combined treadwear resistance, chip and chunking resistance and tire handling performance without significantly negatively affecting the tire tread rubber durability, namely heat durability.

## Claims

1. A tire having an outer circumferential tread of a natural rubber-rich, carbon black-rich, silica-containing sulfur cured rubber composition which comprises, based upon parts by weight per 100 parts by weight elastomer (phr):
(A) diene-based elastomers as:
(1) from 70 to 90 phr of cis 1,4-polyisoprene natural rubber having a cis 1,4-content of at least 96 percent and a Tg in a range of -60°C to -70°C,
(2) from 5 to 15 phr of cis 1,4-polybutadiene rubber having a cis 1,4-content of at least 96 percent and a Tg in a range of 90°C to 110°C, and
(3) from 5 to 15 phr of styrene/butadiene copolymer rubber having a styrene content in a range of from 20 to 25 weight percent and a Tg in a range of -40°C to -60°C,
(B) from 48 to 76 phr of particulate reinforcing filler as rubber reinforcing carbon black and precipitated silica composed of 25 to 40 phr, preferably of 25 to 35 phr, of said carbon black and wherein the weight ratio of said carbon black to said silica in a range of 1.1/1 to 1.3/1, wherein:
(1) said carbon black has an Iodine value in a range of from 110 to 130 mg/g and a dibutyl phthalate (DBP) value in a range of from 120 to 140 ml/100g, and
(2) said silica has a nitrogen surface area value (BET) in a range of 140 to 180m²/g, and
(C) a coupling agent having a moiety reactive with hydroxyl groups contained on the surface of said precipitated silica and another moiety interactive with said diene-based elastomers such as a bis-(3-triethoxysilylpropyl) polysulfide having an average of from 2 to 2.6 or from 3.5 to 4 connecting sulfur atoms in its polysulfidic bridge.

2. The tire of claim 1, wherein said sulfur cured tire tread rubber composition has a balance of physical properties as:
(1) a Shore A hardness (23°C) in a range of 66 to 72,
(2) a G' value in a range of 1.8 to 2.4 MPa,
(3) a DIN abrasion resistance (1 N)(mm³ relative volume loss) in a range of 73 to 99,
(4) a rebound value (100°C) in a range of 64 to 70 percent,
(5) a tan delta (90°C) value in a range of 0.12 through 0.16,
(6) a hot tear resistance value (100°C) in a range of 25 to 40 N/mm, and
(7) a damage resistance index (DRI) in a range of 13 to 16 percent.

3. The tire of claim 1 or 2, wherein said styrene/butadiene copolymer rubber is prepared by aqueous emulsion polymerization of styrene and 1,3-butadiene monomers.

4. The tire of at least one of the preceding claims, wherein said carbon black is an N121 (ASTM designation) rubber reinforcing carbon black.

5. The tire of at least one of the preceding claims, wherein said carbon black has an iodine value of 120 mg/g and a DBP value of 130 ml/100g.

6. The tire of at least one of the preceding claims, wherein said coupling agent is a bis-(3-triethoxysilylpropyl) polysulfide having an average of from 3.5 to 4 connecting sulfur atoms in its polysulfidic bridge.

## Patentansprüche

1. Reifen mit einer äußeren Umfangslauffläche von einer an Naturkautschuk reichen, an Ruß reichen, Kieselsäure enthaltenden, Schwefel-vulkanisierten Kautschukzusammensetzung, die, bezogen auf Gew.-Teile pro 100 Gew.-Teile Elastomer (ThK), umfasst:
(A) Elastomere auf Dienbasis:
(1) 70 bis 90 ThK cis-1,4-Polyisopren-Naturkautschuk mit einem cis-1,4-Gehalt von mindestens 96% und einer Tg im Bereich von -60 bis -70°C,
(2) 5 bis 15 ThK cis-1,4-Polybutadien-Kautschuk mit einem cis-1,4-Gehalt von mindestens 96% und einer Tg im Bereich von 90 bis 110°C und
(3) 5 bis 15 ThK Styrol/Butadien-Copolymerkautschuk mit einem Styrolgehalt im Bereich von 20 bis 25 Gew.-% und einer Tg im Bereich von -40 bis -60°C,
(B) 48 bis 76 ThK teilchenförmigen Verstärkungsfüllstoff als Kautschuk verstärkenden Ruß und gefällter Kieselsäure, zusammengesetzt aus 25 bis 40 ThK, bevorzugt 25 bis 35 ThK, von diesem Ruß, wobei das Gewichtsverhältnis von dem Ruß zu der Kieselsäure im Bereich von 1,1/1 bis 1,3/1 liegt, wobei
(1) der Ruß eine lod-Zahl im Bereich von 110 bis 130 mg/g und einen Dibutylphthalat (DBP)-Wert im Bereich von 120 bis 140 ml/100 g aufweist, und
(2) die Kieselsäure einen Stickstoffoberflächenwert (BET) im Bereich von 140 bis 180 m²/g aufweist, und
(C) einen Haftvermittler mit einer Gruppe, die mit Hydroxylgruppen, die auf der Oberfläche der gefällten Kieselsäure enthalten sind, reaktiv ist, und einer anderen Gruppe, die mit den Elastomeren auf Dienbasis wechselwirkt, wie ein Bis-(3-triethoxysilylpropyl)polysulfid mit einem Durchschnitt von 2 bis 2,6 oder von 3,5 bis 4 verbindenden Schwefelatomen in der Polysulfidbrücke.

2. Reifen nach Anspruch 1, wobei die Schwefel-vulkanisierte Reifenlaufflächen-Kautschukzusammensetzung ausgewogene physikalische Eigenschaften aufweist, wie:
(1) eine Shore A-Härte (23 °C) im Bereich von 66 bis 72,
(2) einen G'-Wert im Bereich von 1,8 bis 2,4 MPa,
(3) eine DIN-Abriebbeständigkeit (1 N) (mm³ relativer Volumenverlust) im Bereich von 73 bis 99,
(4) eine Rückprallelastizität (100 °C) im Bereich von 64 bis 70%,
(5) einen tan delta (90 °C) im Bereich von 0,12 bis 0,16,
(6) eine Warmreißfestigkeit (100 °C) im Bereich von 25 bis 40 N/mm und
(7) einen Schädigungsbeständigkeitsindex (DRI) im Bereich von 13 bis 16%.

3. Reifen nach Anspruch 1 oder 2, wobei der Styrol/Butadien-Copolymerkautschuk durch wässrige Emulsionspolymerisation von Styrol- und 1,3-Butadien-Monomeren hergestellt wird.

4. Reifen nach mindestens einem der vorhergehenden Ansprüche, wobei der Ruß ein N121 (ASTM-Bezeichnung) Kautschuk verstärkender Ruß ist.

5. Reifen nach mindestens einem der vorhergehenden Ansprüche, wobei der Ruß eine lod-Zahl von 120 mg/g und einen DBP-Wert von 130 ml/100 g aufweist.

6. Reifen nach mindestens einem der vorhergehenden Ansprüche, wobei der Haftvermittler ein Bis-(3-triethoxysilylpropyl)polysulfid mit einem Durchschnitt von 3,5 bis 4 verbindenden Schwefelatomen in der Polysulfidbrücke ist.

## Revendications

1. Bandage pneumatique possédant une bande de roulement circonférentielle externe constituée d'une composition de caoutchouc vulcanisé au soufre, contenant de la silice, riche en noir de carbone et riche en caoutchouc naturel, ladite composition comprenant, basés sur des parties en poids par 100 parties en poids d'élastomère (phr) :
(A) des élastomères à base diénique sous la forme de :
(1) à concurrence de 70 à 90 phr, du caoutchouc naturel de cis 1,4-polyisoprène possédant une teneur cis 1,4 s'élevant à au moins 96 % et une valeur Tg dans la plage de -60 °C à -70 °C ;
(2) à concurrence de 5 à 15 phr, du caoutchouc de cis 1,4-polybutadiène possédant une teneur cis 1,4 s'élevant à au moins 96 % et une valeur Tg dans la plage de 90 °C à 110 °C ;
(3) à concurrence de 5 à 15 phr, un caoutchouc de copolymère de styrène/butadiène possédant une teneur en styrène dans la plage de 20 à 25 % en poids et une valeur Tg dans la plage de - 40 °C à -60 °C ;
(B) à concurrence de 48 à 76 phr, une matière de charge particulaire faisant office de renforcement, sous la forme de noir de carbone pour le renforcement du caoutchouc et de silice précipitée, le noir de carbone représentant de 25 à 40 phr, de préférence de 25 à 35 phr, le rapport pondéral dudit noir de carbone à ladite silice se situant dans la plage de 1,1/1 à 1,3/1, dans laquelle :
(1) ledit noir de carbone possède un indice d'iode dans la plage de 110 à 130 mg/g et une valeur de phtalate de dibutyle (DBP) dans la plage de 120 à 140 ml/100 g, et
(2) ladite silice possède une valeur d'aire de surface d'absorption d'azote (BET) dans la plage de 140 à 180 m²/g ; et
(C) un agent de couplage possédant une fraction apte à réagir avec les groupes hydroxyle contenus à la surface de ladite silice précipitée et une autre fraction apte à entrer en interaction avec lesdits élastomères à base diénique, tel qu'un bis(3-triétoxysilylpropyl) polysulfure possédant en moyenne de 2 à 2,6 ou de 3,5 à 4 atomes de soufre de liaison dans son pont polysulfure.

2. Bandage pneumatique selon la revendication 1, dans lequel ladite composition de caoutchouc de bande de roulement de bandage pneumatique vulcanisée au soufre possède un équilibre des propriétés physiques, plus précisément :
(1) une dureté Shore A (23 °C) dans la plage de 66 à 72 ;
(2) une valeur G' dans ou la plage de 1,8 à 2,4 MPa ;
(3) une résistance à l'abrasion DIN (1 N) (en mm³ par rapport à la perte en volume) dans la plage de 73 à 99 ;
(4) une valeur de rebond (100 °C) dans la plage de 64 à 70 % ;
(5) une valeur tan delta (90 °C) dans la plage de 0,12 à 0,16 ;
(6) une valeur de résistance à la fissuration à chaud (100 °C) dans la plage de 25 à 40 N/mm ;
(7) un indice de résistance aux dégradations (DRI) dans la plage de 13 à 16 %.

3. Bandage pneumatique selon la revendication 1 ou 2, dans lequel ledit caoutchouc de copolymère de styrène/butadiène est préparé via une polymérisation aqueuse en émulsion de monomères de styrène et du 1,3-butadiène.

4. Bandage pneumatique selon au moins une des revendications précédentes, dans lequel ledit noir de carbone est du noir de carbone pour le renforcement de caoutchouc N121 (norme ASTM).

5. Bandage pneumatique selon au moins une des revendications précédentes, dans lequel ledit noir de carbone possède un indice d'iode de 120 mg/g et une valeur DBP de 130 ml/100 g.

6. Bandage pneumatique selon au moins une des revendications précédentes, dans lequel ledit agent de couplage est un bis(3-triétoxysilylpropyl) polysulfure possédant en moyenne de 3,5 à 4 atomes de soufre de liaison dans son pont polysulfure.
